# EUROPÄISCHE PATENTSCHRIFT

(11) **EP 2 572 401 B1**
(45) Veröffentlichungstag und Bekanntmachung des Hinweises auf die Patenterteilung: **16.07.2014**
(21) Anmeldenummer: 11722312.3
(22) Anmeldetag: 12.05.2011
(51) Int. Cl.: H01M 10/613, H01M 10/615, H01M 10/617, H01M 10/625, H01M 10/633

(54) **BESCHREIBEN EINER TEMPERIERUNGSANFORDERUNG IN EINEM BYTE**
WRITING A HEAT-TREATMENT REQUIREMENT IN ONE BYTE
DESCRIPTION D'UNE DEMANDE DE RÉGULATION DE TEMPÉRATURE DANS UN MULTIPLET

(30) Priorität: 19.05.2010 DE 102010021038
(43) Veröffentlichungstag der Anmeldung: 27.03.2013
(73) Patentinhaber: Audi AG, 85045 Ingolstadt (DE)
(72) Erfinder: SCHALLI, Niklas, 81825 München (DE)
(74) Vertreter: Herbst, Matthias Heinz
(86) Internationale Anmeldenummer: PCT/EP2011/002356
(87) Internationale Veröffentlichungsnummer: WO 2011/144310

(56) Entgegenhaltungen:
- WO-A1-93/22151
- WO-A1-2009/012038
- WO-A2-2009/120369

## Beschreibung

Die Erfindung betrifft ein Verfahren zum Übermitteln einer Temperierungsanforderung für ein Bauteil eines Kraftfahrzeugs und ein Steuergerät.

Aus dem Stand der Technik sind Plug-in Hybride und Elektrofahrzeuge bekannt, die von extern geladen werden können. Des Weiteren ist es bekannt, eine Batterie während des Ladevorgangs zu temperieren. Dabei sind eine Vielzahl von Randbedingungen hinsichtlich verschiedener Grenztemperaturen einzuhalten.

In der WO 2009/120369 A2 sind ein System und ein Verfahren zum Vorheizen einer Batterie eines Elektrofahrzeugs angegeben.

Die WO 93/22151 offenbart Steuer/Regelmittel für ein elektrisch angetriebenes Fahrzeug, umfassend zwei oder mehr Module, die durch einen seriellen Bus miteinander verbunden sind, wobei der serielle Bus eine oder mehrere Datenleitungen enthält, wobei in einem oder mehreren der Module ein Mittel enthalten ist, um eine Gleich-Vorspannung auf einer Datenleitung des seriellen Busses zu verschieben, und in einem oder mehreren der Module ein Mittel enthalten ist, das die Gleich-Vorspannung auf der Datenleitung überwacht und die Funktionen des Moduls sperrt, wenn die erfasste Gleich-Vorspannung außerhalb eines gesetzten Spannungsbereichs liegt.

Bekannte Regelungen der Temperierungsanforderung sind oft unflexibel oder übermäßig kompliziert.

Die Aufgabe der vorliegenden Erfindung besteht deshalb darin, eine Möglichkeit zur Verfügung zu stellen, Temperierungsanforderungen besonders platzsparend auszugestalten, wobei sich aber weiterhin alle Erfordernisse abdecken lassen.

Diese Aufgabe wird erfindungsgemäß durch die unabhängigen Ansprüche gelöst. Vorteilhafte Weiterbildungen ergeben sich aus den abhängigen Ansprüchen.

Bei einem Verfahren zum Übermitteln einer Temperierungsanforderung für ein Bauteil werden mit einem Signal eine Vielzahl von Arten der Temperierungsanforderung in einem Byte beschrieben.
Dementsprechend ist durch eine Vorrichtung zum Verarbeiten eines Signals, das eine Temperierungsanforderung beschreibt, das Signal mit einem Byte verarbeitbar, das eingerichtet ist, eine Vielzahl von Arten der Temperierungsanforderung zu beschreiben. Ein Verarbeiten des Signals meint dabei ein Generieren und/oder Auswerten.

Der Erfindung liegt die Erkenntnis zugrunde, dass sich Informationen in heutigen binären Systemen am platzsparendsten in Zweierpotenzen übertragen lassen. Dabei hat sich überraschend herausgestellt, dass acht Arten der Temperierungsanforderung in der Praxis durchaus ausreichend sind, um alle auftretenden Erfordernisse abzudecken. Deshalb genügt es, genau ein Byte zu verwenden, um die Vielzahl von Temperierungsanforderungen zu beschreiben.

Die Arten der Temperierungsanforderung enthalten leichtes Heizen, mittleres Heizen und starkes Heizen und/oder leichtes Kühlen, mittleres Kühlen und starkes Kühlen und/oder
dass ein Fehler vorliegt und/oder ein Durchspülen.

Insbesondere ist das Bauteil fluidgekühlt und für eine Homogenisierung der Temperaturverteilung mit dem Fluid durchspülbar.

Das Signal ist ein Byte und die acht Arten der Temperierungsanforderung sind durch genau dieses eine Byte beschreibbar.

Die Vorrichtung ist vorzugsweise eine Vorrichtung für eine Bus-Architektur, insbesondere für einen CAN-Bus, und das Signal eine Botschaft auf dem Bus.

Bevorzugt ist das Bauteil eine Batterie, insbesondere eine Traktionsbatterie.

Des Weiteren ist ein Steuergerät, insbesondere für das Batteriemanagementsystem oder das Lademanagement, angegeben.

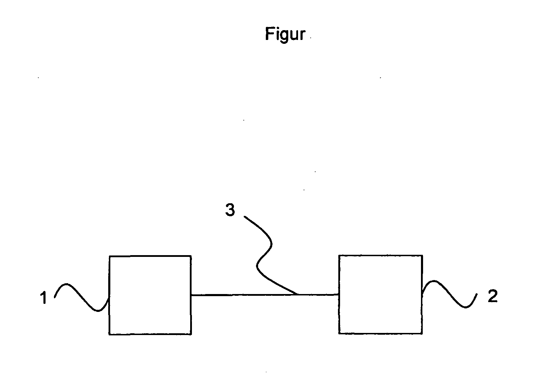

Weitere Merkmale und Vorteile der Erfindung ergeben sich aus der Beschreibung eines Ausführungsbeispiels anhand der Zeichnung. Dabei zeigt die Figur ein Kraftfahrzeug und ein mobiles Endgerät.

In der Figur erkennt man eine erste Vorrichtung 1 zum Verarbeiten eines Signals in Form eines Steuergerätes für ein Batteriemanagementsystem und eine zweite Vorrichtung 2 zum Verarbeiten eines Signals in Form eines Steuergerätes für ein Lademanagement, das insbesondere in einem Gateway zwischen verschiedenen (CAN-)Bussen angeordnet ist.

Eine Temperierungsanforderung in Form einer Anforderung zur Batterietemperierung soll möglichst einfach von der ersten Vorrichtung 1 zum Verarbeiten eines Signals in Form eines Steuergerätes für ein Batteriemanagementsystem zu der zweiten Vorrichtung 2 zum Verarbeiten eines Signals in Form eines Steuergerätes für ein Lademanagement übertragen werden. Dazu wird in einem Signal für eine Verbindung 3 ein Byte verwendet, dessen acht unterschiedliche Zustände folgende Anforderungen beschreiben: Fehler, leicht Heizen, mittel Heizen, stark Heizen, Spülen (Durchspülen von Kühlmittel ohne Heizen oder Kühlen, um eine homogene Temperaturverteilung in der Batterie zu erzielen), stark Kühlen, mittel Kühlen, leicht Kühlen.

## Patentansprüche

1. Verfahren zum Übermitteln einer Temperierungsanforderung für eine Batterie eines Kraftfahrzeugs mit einem Signal, bei dem mit dem Signal eine Vielzahl von Arten der Temperierungsanforderung in einem Byte beschrieben werden, umfassend zumindest folgende Temperaturanforderungen:
- ein leichtes Heizen, ein mittleres Heizen und ein starkes Heizen;
- ein leichtes Kühlen, ein mittleres Kühlen und ein starkes Kühlen;
- ein Vorliegen eines Fehlers; und
- eine Durchspülung der Batterie mit einem Fluid, um eine Homogenisierung der Temperaturverteilung der Batterie zu erzielen.

2. Verfahren nach Anspruch 1,
**dadurch gekennzeichnet,**
**dass** als Batterie eine Traktionsbatterie verwendet wird.

3. Verfahren nach Anspruch 1 oder 2,
**dadurch gekennzeichnet,**
**dass** das Signal als Botschaft über eine Bus-Architektur übermittelt wird.

4. Verfahren nach Anspruch 3,
**dadurch gekennzeichnet,**
**dass** das Signal als Botschaft auf einem CAN-Bus übermittelt wird.

5. Steuergerät eines Kraftfahrzeugs zum Generieren und/oder Auswerten eines Signals, das eine Vielzahl von Arten der Temperierungsanforderung für eine Batterie eines Kraftfahrzeugs in einem Byte beschreibt, wobei die Arten der Temperierungsanforderungen umfassen:
- ein leichtes Heizen, ein mittleres Heizen und ein starkes Heizen;
- ein leichtes Kühlen, ein mittleres Kühlen und ein starkes Kühlen;
- ein Vorliegen eines Fehlers; und
- eine Durchspülung der Batterie mit einem Fluid, um eine Homogenisierung der Temperaturverteilung der Batterie zu erzielen.

6. Steuergerät nach Anspruch 5,
**dadurch gekennzeichnet,**
**dass** die Batterie eine Traktionsbatterie ist.

7. Steuergerät nach Anspruch 5 oder 6, welches für ein Batteriemanagementsystem oder für ein Lademanagement vorgesehen ist.

## Claims

1. Method for transmitting a temperature-control request for a battery of a motor vehicle via a signal, in which in one byte a plurality of types of the temperature-control request is described by the signal, said method comprising at least the following temperature-control requests:
- gentle heating, medium heating and strong heating;
- gentle cooling, medium cooling and strong cooling;
- presence of a fault; and
- flushing the battery with a fluid in order to homogenise the temperature distribution in the battery.

2. Method according to claim 1, **characterised in that** a traction battery is used as the battery.

3. Method according to either claim 1 or claim 2, **characterised in that** the signal is transmitted as a message via a bus architecture.

4. Method according to claim 3, **characterised in that** the signal is transmitted as a message on a CAN bus.

5. Control device of a motor vehicle for generating and/or evaluating a signal which describes in one byte a plurality of types of the temperature-control request for a battery of a motor vehicle, wherein the types of the temperature-control request comprise:
- gentle heating, medium heating and strong heating;
- gentle cooling, medium cooling and strong cooling;
- presence of a fault; and
- flushing the battery with a fluid in order to homogenise the temperature distribution in the battery.

6. Control device according to claim 5, **characterised in that** the battery is a traction battery.

7. Control device according to either claim 5 or claim 6, which is provided for a battery management system or for charge management.

## Revendications

1. Procédé de transmission d'une demande de régulation de température pour une batterie d'un véhicule automobile par un signal, dans lequel on décrit avec le signal une pluralité de types de demande de régulation de température dans un multiplet, comprenant au moins les demandes de température suivantes :
- un chauffage léger, un chauffage moyen et un chauffage fort ;
- un refroidissement léger, un refroidissement moyen et un refroidissement fort ;
- la présence d'une panne ; et
- un rinçage complet de la batterie avec un fluide pour obtenir une homogénéisation de la distribution de température de la batterie.

2. Procédé selon la revendication 1,
**caractérisé en ce que**
l'on utilise comme batterie une batterie de traction.

3. Procédé selon la revendication 1 ou la revendication 2,
**caractérisé en ce que**
le signal est transmis sous la forme d'un message via une architecture de bus.

4. Procédé selon la revendication 3,
**caractérisé en ce que**
le signal est transmis sous la forme d'un message sur un bus CAN.

5. Appareil de commande d'un véhicule automobile pour générer et évaluer un signal qui décrit une pluralité de types de demande de régulation de température pour une batterie d'un véhicule automobile dans un multiplet, dans lequel les types de demandes de régulation de température comprennent :
- un chauffage léger, un chauffage moyen et un chauffage fort ;
- un refroidissement léger, un refroidissement moyen et un refroidissement fort ;
- la présence d'une panne ; et
- un rinçage complet de la batterie avec un fluide pour obtenir une homogénéisation de la distribution de température de la batterie.

6. Appareil de commande selon la revendication 5, **caractérisé en ce que**
la batterie est une batterie de traction.

7. Appareil de commande selon la revendication 5 ou la revendication 6, qui est prévu pour un système de gestion de batterie ou pour un système de gestion de charge.
